# NEUE EUROPÄISCHE PATENTSCHRIFT

(11) **EP 1 308 066 B2**
(45) Veröffentlichungstag und Bekanntmachung des Hinweises auf die Entscheidung über den Einspruch: **20.06.2012**
(45) Hinweis auf die Patenterteilung: 09.06.2004
(21) Anmeldenummer: 01969425.6
(22) Anmeldetag: 18.07.2001
(51) Int. Cl.: H04W 48/18

(54) **VORRICHTUNG UND VERFAHREN ZUM ERZWINGEN EINES MOBILFUNKNETZES**
DEVICE AND METHOD FOR FORCING A MOBILE RADIO NETWORK
According to the requirements of Rule 35(13) EPC, the terminology and the signs shall be consistent throughout the application. This requirement is not met in view of the use of the expressions "first node" in claim 1 and "node" in claim 19 and "further node" in claim 20

(30) Priorität: 01.08.2000 DE 10038732
(43) Veröffentlichungstag der Anmeldung: 07.05.2003
(73) Patentinhaber: Vodafone Holding GmbH, 40213 Düsseldorf (DE)
(72) Erfinder: JOUSSEN, Fritz, 47057 Duisburg (DE); MAUSS, Oliver, 41352 Korschenbroich (DE); DOHMANN, Dierk, 40547 Düsseldorf (DE); CONRAD, Matthias, 40545 Düsseldorf (DE)
(74) Vertreter: Weisse, Renate
(86) Internationale Anmeldenummer: PCT/EP2001/008319
(87) Internationale Veröffentlichungsnummer: WO 2002/011484

(56) Entgegenhaltungen:
- DE-A- 4 324 094
- DE-A1- 19 831 407
- DE-A1- 19 918 848
- US-A- 5 911 120
- US-A- 6 058 309
- DATABASE GSM 02.11 ETSI/PT12 GSM: 'Service Accessibility'
- DATABASE ETSI GSM 02.11 ETS 300507, 31 Januar 1996 'Digital cellular telecommunications system (Phase 2); Service accessibility ( GSM 02.11)'

## Beschreibung

### Technisches Gebiet

Die Erfindung betrifft eine Vorrichtung für Mobilfunkendgeräte zum Einbuchen beim Wechsel von Mobilfunknetzen durch Ortsänderung (Roaming), insbesondere durch grenzüberschreitende Ortsänderung, wobei Auswahlmittel zum Erzwingen des Funknetzes eines vorbestimmten Mobilfunknetzanbieters für einen bestimmten Ort und /oder für eine vorbestimmte Zeit vorgesehen sind. Ferner betrifft die Erfindung ein Verfahren für Mobilfunkendgeräte zum Einbuchen beim Wechsel von Mobilfunknetzen durch Ortsänderung (Roaming), insbesondere durch grenzüberschreitende Ortsänderung, wobei das Funknetz eines vorbestimmten Mobilfunknetzanbieters für einen bestimmten Ort und /oder für eine vorbestimmte Zeit erzwungen wird.

### Stand der Technik

Mobilfunknetze werden in einem Land von verschiedenen Anbietern betrieben. Die Mobilfunknetze dieser Anbieter sind insbesondere nach dem GSM- oder UMTS-Standard (GMS = Global Service Mobile / UMTS = Universal Mobile Telecomunication System) aufgebaut. Diese Standarde legen fest, daß das zu vernetzende geographische Gebiet, in welchem die Mobilfunkendgeräte funktionieren sollen, in lauter Funkzellen oder Waben aufgeteilt ist. Jede Funkzelle weist entsprechende Empfangs- und Sendeantennen auf, die derart angeordnet sind, daß in dieser Zelle möglichst gute Empfangs- und Sendeeigenschaften zu erzielen sind. Das Funknetz des Anbieters im Heimatland, bei dem der Mobilfunkteilnehmer registriert ist, wird als Heimatnetz bezeichnet.

Nach dem GSM- bzw. UMTS Standard ist es möglich, daß sich ein Mobilfunkteilnehmer von einer Funkzelle in eine andere bewegen kann. Dieser Vorgang wird Roaming (engl. roam = wandern, wandern durch, umherschweifen) genannt. Die entsprechenden Funktionen zum Roaming werden mit Mobilitätsfunktionen bezeichnet. Die Mobilitätsfunktionen basieren im wesentlichen auf GSM- bzw. UMTS-Datenbanken und den Signalisierungsprozeduren des MAP (= Mobile Application Part). Die relevanten MAP-Prozeduren sind vor allem die Aufenthaltsaktualisierung (Location Registration/Update, IMSI attach/detach), die Abfrage von Teilnehmerdaten beim Rufaufbau, und das Paging (Funkruf). Paging ist die Sammelbezeichnung für Kommunikationsdienste zur einseitigen funktechnischen Übertragung kurzer Nachrichten.

Die wichtigsten Funktionen der GSM-Mobilitätsverwaltung sind ferner das Einbuchen in ein PLMN (= Public Land Mobile Network): "Location Registration" und Aktualisieren der Daten über den momentanen Aufenthaltsort eines Mobilfunkendgerätes: "Location Updating" sowie die Identifizierung und Authentifizierung eines Benutzers. Diese Funktionen sind eng miteinander verknüpft. Während des Einbuchens in ein Funknetz während des "Location Update"-Vorgangs und beim Verbindungsaufbau wird die Identität eines Mobilfunkteilnehmers festgestellt und überprüft (Authentifizierung).

Beim Bewegen eines Mobilfunkteilnehmers innerhalb nationaler Grenzen ist die Sendeleistung des nationalen Anbieters in der Regel ausreichend. In seltenen Fällen kann - meist in unbewohnten Gebieten - ein sogenanntes Funkloch entstehen. In diesen Fällen versucht das Mobilfunkendgerät zunächst auf einen anderen Anbieter umzuschalten, der vielleicht dieses Gebiet abdeckt. Schlimmstenfalls liegt sogar gar kein Empfang von einem Funknetzanbieter vor.

Die Funktionen für Roaming werden detailiert für Funknetze des GSM-Standards, beispielsweise in "GSM Global System for Mobile Communication" 2. Auflage, der Autoren J. Eberspächer und H.-J. Vögel erschienen 1999 im Verlagt B.G. Teubner Stuttgart, Leipzig, beschrieben.

Mobilfunkteilnehmer können natürlich auch grenzüberschreitend ihr Mobilfunkendgerät nutzen, vorausgesetzt, daß entsprechende Vereinbarungen mit den Anbietern fremder GSM- bzw. UMTS- Funknetze bestehen. Das Mobilfunkendgerät sucht sich dann automatisch denjenigen Mobilfunkanbieter aus, der die höchste Sendeleistung vorweist.

Dies hat den Vorteil, daß auf diese Weise auch im Ausland ein optimaler Empfang gewährleistet wird. Nachteilig an diesem System ist jedoch, daß Partner des Heimatnetzanbieters wegen geringerer Sendeleistung, als die Konkurrenz, beim Einbuchen in das Netz übergangen wird.

Das US-Patent 6 058 309 offenbart ein zellulares Netzwerk für Mobilfunktelefone mit einem erweiterten Roaming. In dem zellular aufgebauten Netzwerk werden automatisch gewünschte Mobilfunknetzanbieter für einen Teilnehmer beim Roaming ausgewählt. Nachteilig an diesem System ist jedoch, daß ein gewünschter Mobilfunknetzpartner des Heimatnetzanbieters ohne Alternative automatisch ausgewählt wird. Wenn z.B. die Sendeleistung sehr gering ist, kann ein alternativer Mobilfunknetzanbieter mit stärkerer Sendeleistung, zu dem einen gewünschten und automatisch gewählten Anbieter nicht ausgewählt werden.

In dem Standard ETS 300 507, Digital cellular telecommunications system (Phase 2); Service accessibility (GSM 02.11), Januar 1996, Second Edition wird ein Einbuchen eines Mobilfunkendgeräts mit einer SIM-Karte in ein Mobilfunknetz beschrieben In der SIM-Karte ist dazu neben dem Heimatnetz eine Liste mit weiteren, zugelassenen Mobilfunknetzen in einem Datenfeld gespeichert. In dieser Auswahlliste sind die Mobilfunknetze nach Priorität geordnet. Zusätzlich ist ein Datenfeld mit verbotenen Mobilfunknetzen in der SIM-Karte vorgesehen. Beim Anschalten des Mobilfunkendgeräts werden zuerst das Heimatnetz und dann die Netze der Auswahlliste der Reihenfolge nach berücksichtigt. Dabei versucht sich das Mobilfunkendgerät in das erste erreichbare und erlaubte Mobilfunknetz dieser Liste einzubuchen.

### Offenbarung der Erfindung

Aufgabe der Erfindung ist es daher, die Nachteile des Standes der Technik zu beseitigen und die ausländischen Partnernetze bei der Einbuchung eines Mobilfünkendgerätes in ein Mobilfunkendnetz stärker zu berücksichtigen.

Erfindungsgemäß wird die Aufgabe durch eine Vorrichtung für Mobilfunkendgeräte mit den Merkmalen des Anspruchs 1 gelöst.

Weiterhin wird die Aufgabe durch ein Verfahren für Mobilfunkendgeräte zum Einbuchen beim Wechsel von Mobilfunknetzen mit den Merkmalen des Anspruchs 7 gelöst.

Vorteilhafterweise sind bei der erfindungsgemäßen Vorrichtung die vorbestimmten Mobilfunknetzanbieter mit einer entsprechenden Ortskodierung in einer Liste auf einer SIM-Karte, welche für das Mobilfunkendgerät zur Identifizierung vorgesehen ist, abgespeichert. Da die Informationen der SIM-Karte bei jedem Einbuchen durch das Mobilfunkendgerät abgefragt werden, kann so gleichzeitig die Information für das geeignete Partnernetz auf einfachste Weise erhalten werden. Nach der Erfindung erfolgt eine Gewichtung als Auswahlkriterium für die Mobilfunknetzanbieter, welche ebenfalls auf der SIM-Karte gespeichert ist. Auf diese Weise kann beispielsweise, wenn das Funknetz des einen Partners zu schwach ist, auf den nächsten Partner umgeschaltet werden, der ggf. in diesem Gebiet über ein stärkeres Funknetz verfügt. Die Reihenfolge, wie bei der Auswahl des Partners vorgegangen werden soll, ist auf der SIM-Karte implementiert.

Es hat sich ferner als sinnvolle Ergänzung für die erfindungsgemäße Vorrichtung herausgestellt, wenn Prüfmittel zum Überprüfen vorgesehen sind, welche überprüfen, ob ein ausreichender Empfang für das vorbestimmte Mobilfunknetz gegeben ist. In Kombination mit Schaltmitteln, die vorgesehen sein können, kann dann gegebenenfalls auf ein Funknetz mit einem besseren Empfang geschaltet werden, falls der Empfang des vorbestimmten Mobilfunknetzanbieters für einen Verbindungsaufbau zu schwach oder nicht vorhanden ist.

### Offenbarung der Erfindung

Eine weitere vorteilhafte Ausgestaltung der Erfindung ergibt sich durch Auswahlmittel zur Auswahl einer Sprache. Auf diese Weise kann ein Mobilfunkteilnehmer immer in einer ausgewählten Sprache, beispielsweise in Deutsch, mit Telekommunikationsdiensten kommunizieren. Die ausgewählte Sprache läßt sich ggf. voreinstellen. Dem Mobilfunkteilnehmer stehen dann, falls dies durch den ausländischen Partner angeboten wird, auch im Ausland die Telekomunikationsdienste in seiner voreingestellten Sprache zur Verfügung. Die Telekommunikationsdienste, wie z.B. Hotelführer, können so auf die nationalen Bedürfnisse des Mobilfunkteilnehnmers zugeschnitten sein. Die Kommunikation zwischen Mobilfunkteilnehmer und Mobilfunkendgerät erfolgt vorteilhafterweise über eine optische und/oder akustische Anzeige.

Nach dem erfindungsgemäßen Verfahren werden die vorbestimmten Mobilfunknetzanbieter mit einer entsprechenden Ortskodierung in einer Liste auf einer SIM-Karte, welche für das Mobilfunkendgerät zur Identifizierung vorgesehen ist, abgespeichert. Die SIM-Karte enthält einen Speicher, auf dem Informationen, insbesondere zur Identifizierung und Authentifizierung, abgespeichert sind. Bei jedem Einbuchen in ein Mobilfunknetz werden diese, in der Regel als digitale Daten vorliegenden Informationen, durch das Mobilfunkendgerät abgefragt. Nach dem erfindungsgemäßen Verfahren werden nunmehr die Mobilfunknetzanbieter unterschiedlich gewichtet. Je nach voreingestellter Gewichtung und Stärke des Funknetzes können so die Mobilfunknetzanbieter in einer vorbestimmten Reihenfolge ausgewählt werden.

Wenn ausreichend Speicherkapazität auf der SIM-Karte vorhanden ist, kann so beim Einschalten bzw. beim Einbuchen des Mobilfunkendgerätes in ein Mobilfunknetz gleichzeitig die Information für das geeignete Partnernetz auf einfachste Weise von der SIM-Karte ausgelesen und ausgewählt werden. Die Auswahl wird nach vorbestimmten Kriterien vorgenommen. Es erfolgt daher eine Überprüfung, ob eine ausreichende Empfangsleistung für das Funknetz des erzwungenen Mobilfunknetzanbieters vorhanden ist, die einen reibungslosen Betrieb für den Mobilfunkteilnehmer gewährleistet. Sollte kein ausreichender oder sogar gar kein Empfang vorhanden sein, wird dem Anbieter der Vorrang gegeben, der über eine ausreichend hohe Empfangsleistung verfügt.

In einer vorteilhaften Ausgestaltung des Verfahrens kann eine Sprache ausgewählt werden, in der der Mobilfunkteilnehmer mit dem Mobilfunknetzanbieter kommuniziert bzw. in welcher Sprache die Anzeige erfolgt. Ferner können so die Telekommunikationsdienste aufgrund dieser Sprachauswahl ihre Dienste in der ausgewählten Sprache anbieten.

Vorteilhafterweise ist bei dem erfindungsgemäßen Verfahren eine Sprache voreingestellt, die von dem erzwungenen Mobilfunknetzanbieter zu verwenden ist. Hierdurch kann der Mobilfunkteilnehmer immer in seiner voreingestellten Sprache, beispielsweise Deutsch, kommunizieren. Die Informationen werden in geeigneter Weise in der voreingestellten Sprache mit einer optischen und/oder akustischen Anzeige dargestellt.

In einer vorteilhaften Ausgestaltung erfolgt die Steuerung der Auswahl und Überprüfung über ein auf der SIM-Karte vorgesehenes SIM-Application-Toolkit. Dies sind intelligente Algorithmen und/oder integrierte Schaltkreise, die auf der SIM-Karte vorgesehen sind, welche insbesondere den Ablauf für die Auswahl des Mobilfunkanbieters steuern.

In einer weiteren Ausgestaltung des erfindungsgemäßen Verfahrens wird, sobald das Mobilfunknetz unterbrochen wird, erneut das Funknetz eines vorbestimmten Mobilfunknetzanbieters für einen bestimmten Ort und /oder für eine vorbestimmte Zeit erzwungen.

Weitere Vorteile ergeben sich aus dem Gegenstand der Unteransprüche.

### Kurze Beschreibung der Zeichnung

- Fig. 1: zeigt in einer Prinzipskizze zwei Zellen eines Mobilfunknetz, die durch eine Grenze getrennt sind.
- Fig. 2: zeigt eine Prinzipskizze eines Mobilfunkendgerätes mit einer erfindungsgemäßen Vorrichtung.
- Fig. 3: zeigt schematisch ein Flußdiagramm zum Erzwingen eines Mobilfunknetzanbieters.
- Fig. 4: zeigt schematisch ein Flußdiagramm für den Einbuchvorgang.

### Bevorzugtes Ausführungsbeispiel

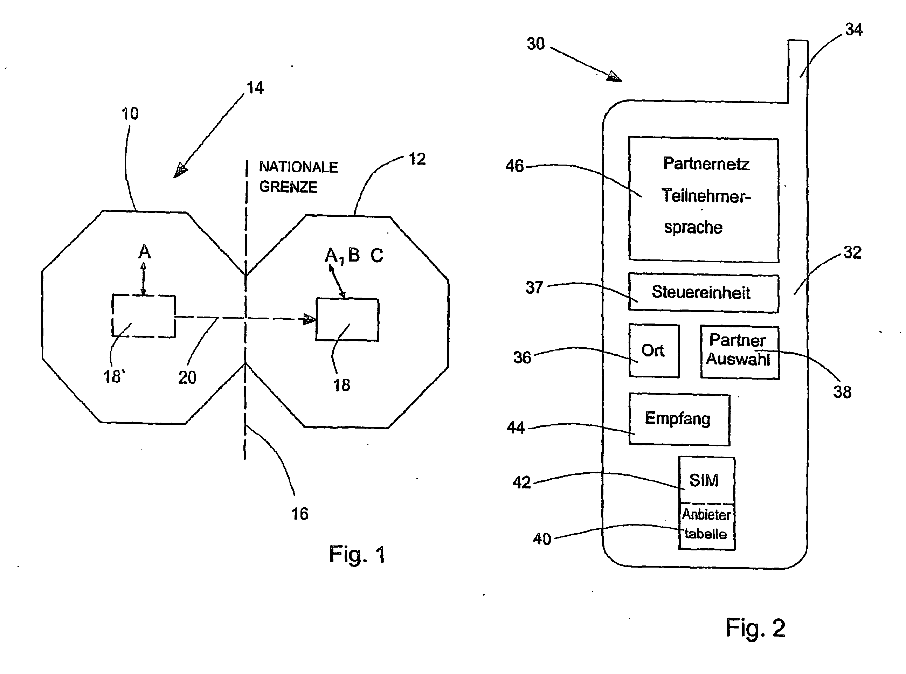

Ein Land, wie z.B. Deutschland, wird von einem Mobilfunknetzanbieter in lauter Zellen eingeteilt. Fig. 1 zeigt in einer Prinzipskizze beispielhaft zwei als Waben ausgebildete räumliche Zellen 10, 12 eines Mobilfunknetzes 14, die durch eine nationale Grenze 16 getrennt sind. Die Zellen 10, 12 entstehen durch Aufstellen von Sende- und Empfangsmasten, über die ein Mobilfunkteilnehmer 18 bzw. 18' mit einem anderen Teilnehmer kommuniziert. Diese Sende- und Empfangsmasten decken immer nur ein bestimmtes Gebiet ab. Dieser Abdeckungsbereich wird als eine Zelle definiert. Der Wechsel von einer Zelle 10 in eine andere Zelle 12 wird als Roaming bezeichnet. Die entsprechenden technischen Übergaben sind beispielsweise im GMS- und UMTS-Standard vorgeschrieben.

Die Zelle 10 wird im vorliegende*n* Ausführungsbeispiel durch den Anbieter "A" abgedeckt. "A" ist der Heimatfunknetzanbieter eines Mobilfunkteilnehmers 18, der sich über die Grenze 16 bewegt hat (Roaming). Die Bewegung des Mobilfungteilnehmers über die Grenze 16 wird durch den gestrichelten Kasten 18' und gestrichelten Pfeil 20 angedeutet. In dem Heimatfunknetz - Zelle 10 - ist der Heimatfunknetzanbieter "A" in der Regel der alleinige Anbieter, auf den der Mobilfunkteilnehmer 18' zurückgreift.

Die Zelle 12 wird hingegen durch mehrere ausländischen Anbieter "A₁", "B" und "C" abgedeckt, wobei der Anbieter "A₁"der ausländische Partner von dem Heimatanbieter "A" ist. Der Heimatanbieter A möchte nun, daß nicht einer der fremden ausländischen Anbieter "C" und "D" als Netzanbieter in Erscheinung treten, sondern der Partner "A₁". Zur Erhöhung des Komforts soll auch bei einem Grenzübertritt möglichst die gleiche Sprache bei allen Telekommunikationsdiensten optisch und ggf. akustisch angezeigt werden.

Fig. 2 zeigt eine Prinzipskizze eines Mobilfunkendgerätes 30 mit einer erfindungsgemäßen Vorrichtung. Das Mobilfunkendgerät 30 weist ein Gehäuse 32 mit einer Antenne 34 auf. In dem Gehäuse 32 ist ein Modul 36 zur Ortsbestimmung vorgesehen. Ferner ist in dem Gehäuse 32 des Mobilfunkendgeräts 30 eine mikroprozessorgesteuerte Steuereinheit 37 mit einem nicht dargestellten Arbeitsspeicher vorgesehen. Die Steuereinheit 37 steuert Modul 38, welches die Auswahl des Mobilfunknetzanbieters vornimmt. Die Mobilfunknetzanbieter liegen in Abhängigkeit vom Ort "x" als Anbietertabelle in einem nichtflüchtigen Speicher 40 auf einer SIM-Karte 42 vor. Die SIM-Karte 42 (SIM = Small Identity Module) dient insbesondere zur Identifikation eines Teilnehmers 18 in einem Mobilfunknetz 10, 12 und enthält im vorliegendem Ausführungsbeispiel ein SIM-Application-Toolkit (SAT), welches ein intelligentes Auswählen des geeigneten Mobilfunknetzpartners ermöglicht und/oder unterstützt.

Ein Modul 44 im Gehäuse des Mobilfunkendgeräts 30 dient zur Überprüfung der Sendeund Empfangsleistung des ausgewählten Mobilfunknetzanbieters. Sollte die Sende- und Empfangsleistung des ausgewählten Mobilfunknetzanbieters zu gering ausfallen, wird ein anderer Mobilfunknetzanbieter nach festgelegten Kriterien ausgewählt. Die Kriterien bzw. die Auswahlgewichtung wird ebenfalls auf der SIM-Karte gespeichert.

Eine Anzeige 46 dient dazu, dem Mobilfunkteilnehmer 18, 18' möglichst in seiner voreingestellten Sprache, z.B. Deutsch, Informationen anzuzeigen. Bei diesen Informationen kann es sich um Telekommunikationsdienste, wie beispielsweise Hotelführer oder Wettervorhersage, handeln.

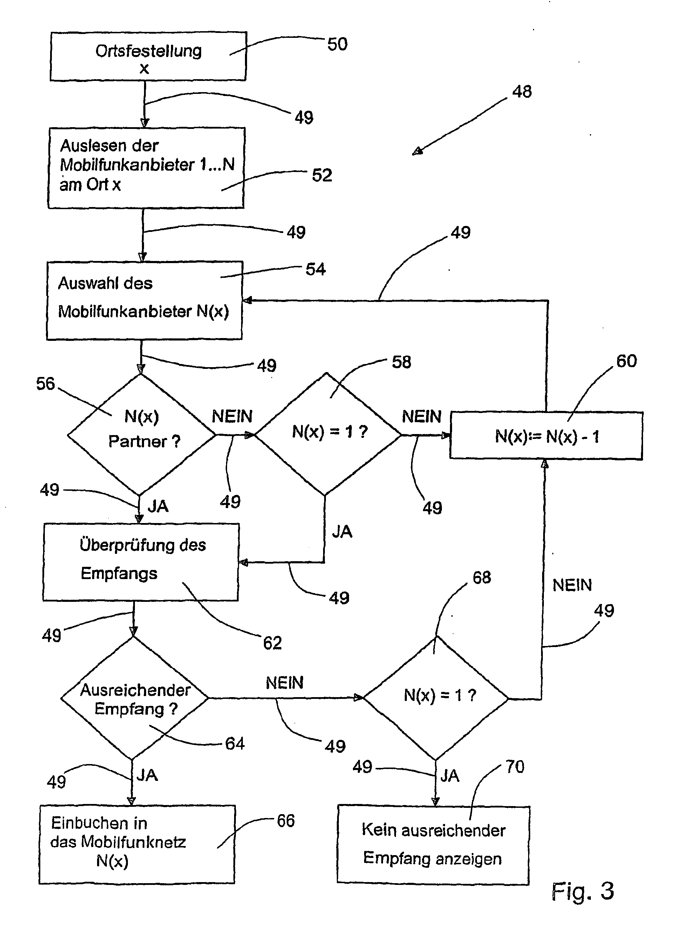

Fig. 3 zeigt beispielhaft ein Flußdiagramm 48 zum Erzwingen eines Mobilfunknetzanbieters "A₁". Pfeile 49 führen in diesem Flußdiagramm 48 immer zum nächstfolgenden Schritt. Mit Kasten 50 wird die Ermittlung des Aufenthaltsortes "x" des Mobilfunkteilnehmers 18, 18' dargestellt. Diese Information erhält das Mobilfunkendgerät 30 in der Regel automatisch, sobald er sich in einer Zelle 10, 12 eines Mobilfunknetzanbieters befindet bzw. in eine Zelle 10, 12 einbuchen möchte.

Aus dem Speicher 40 der SIM-Karte 42 wird eine Anbietertabelle durch die Steuereinheit 37 ausgelesen. Die Anbietertabelle ist diesem Ort "x" zugeordnet. In der Anbietertabelle sind Anbieter 1 bis N gelistet, wobei N die maximale Zahl der vorhandenen Anbieter ist. Aus dieser Tabelle wird der letzte Anbieter N(x) der Anbietertabelle ausgewählt, was mit Kasten 54 angedeutet wird. N(x) ist im vorliegenden Flußdiagramm 48 eine Variable, die Werte von 1 bis N annehmen kann. Als nächster Schritt wird nun überprüft, ob der Anbieter N(x) ein Mobilfunknetzpartner "A₁" von dem Heimatnetzanbieter "A" ist - Raute 56. Lautet die Antwort "Nein", wird als nächstes ermittelt, ob es sich schon um den letztmöglichen auswählbaren Anbieter in der Anbietertabelle handelt - Raute 58. Handelt es sich noch nicht um den letzten Anbieter, wird N(x) auf den nächsten Anbieter N(x)-1 gesetzt, Kasten 60, und wieder als Anbieter ausgewählt - Kasten 54.

Wenn sich herausstellt, daß N(x) ein Mobilfunknetzpartner "A₁" von dem Heimatnetzanbieter "A" ist - Raute 56, wird überprüft, ob dieser Anbieter auch über eine ausreichend gute Sende- und Empfangsleistung verfügt - Kasten 62. Falls sich herausstellt, beispielsweise durch Vergleichen mit Schwellwerten, daß ein ausreichender Empfang vorhanden ist - Raute 64, wird in das Mobilfunknetz des Mobilfunknetzpartners "A₁" eingebucht - Kasten 66.

Wird festgestellt, daß kein ausreichender Empfang vorhanden ist - Raute 64, wird nochmals überprüft, ob es sich hierbei bereits um den letztmöglichen Anbieter N(x) = 1 handelt - Raute 68. Ergibt die Überprüfung, daß dies bereits der letzte ausgewählte Anbieter aus der Anbietertabelle ist, wird angezeigt, daß kein ausreichender Empfang für eine Mobilfunkteilnahme vorhanden ist - Kasten 70.

Wird festgestellt, daß die Variable N(x) noch nicht den letzten Anbieter enthält - Raute 68, wird N(x) wieder um 1 auf N(x)-1 heruntergezählt - Kasten 60, also der nächste Anbieter ausgewählt - Kasten 54.

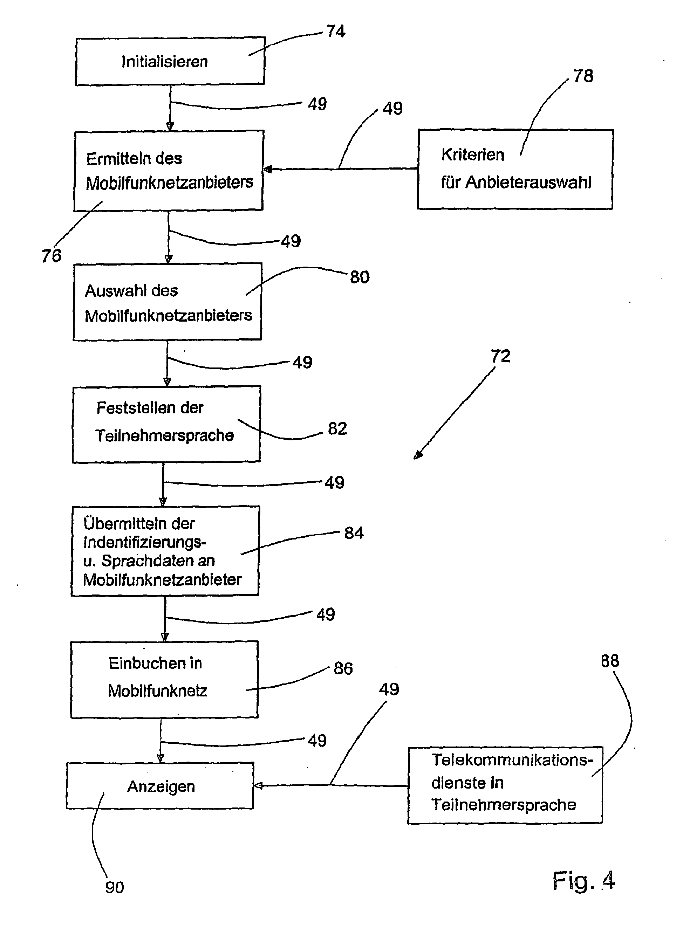

Fig. 4 zeigt schematisch ein Flußdiagramm 72 für einen Einbuchvorgang in ein Mobilfunknetz 10 bzw. 12. Zunächst erfolgt eine Initialisierung des Mobilfunkendgeräts 30, d.h. alle einstellbaren Parameter werden in einen definierten Zustand gebracht. Dieser Initialisiervorgang wird mit Kasten 74 symbolisiert. Anschließend werden die Mobilfunknetzanbieter für die Zelle 10, 12 ermittelt - Kasten 76, d.h. die Anbietertabelle wird aus dem Speicher 40 der SIM-Karte 42 ausgelesen. Dabei haben Kriterien für die Anbieterauswahl - Kasten 78 - erheblichen Einfluß auf die Auswahl des Mobilfunknetzanbieters "A₁". Ein wichtiges Kriterium ist z.B., ob der Mobilfunknetzanbieter ein Partner des Heimatnetzanbieters ist oder nicht. Die Mobilfunknetzpartner erhalten eine höhere Priorität, als solche, die keine Partner sind. Ein weiteres Kriterium ist beispielsweise die Güte des Empfangs. Diese Kriterien werden ebenfalls ausgelesen und tragen zur Auswahl des geeigneten Mobilfunknetzanbieters "A₁" bei - Kasten 80. Eine detaillierte Beschreibung des Zusammenspiels für die Auswahl wurde bereits mit der Beschreibung von Fig. 3 erläutert.

Wenn schließlich der geeignete Mobilfunknetzanbieter, z.B. "A1", feststeht, wird die gewünschte oder voreingestellt Sprache des Mobilfunkteilnehmers bestimmt - Kasten 82. Neben den persönlichen Identifzierungsdaten zur Mobilfunkteilnahme werden die Sprachdaten an den ausgewählten Mobilfunknetzanbieter übermittelt, Kasten 84. Nun erfolgt das eigentliche Einbuchen in das Mobilfunknetz des Mobilfunknetzanbieters - wenn möglich, der Partner "A₁". Dieser ausländische Mobilfunkanbieter kommuniziert mit dem Mobilfunkteilnehmer in der gewohnten Sprache - Kasten 88. Sämtliche Telekommunikationsdienste werden beispielsweise in Deutsch angezeigt - Kasten 90. Die Anzeige kann sowohl akustisch als auch optisch erfolgen. Sollte die Verbindung zum Mobilfunknetz aus irgendwelchen Gründen unterbrochen werden beginnt das Einbuchverfahren in das Mobilfunknetz gemäß dem Flußdiagramm 72 von vorne.

## Patentansprüche

1. Vorrichtung für Mobilfunkendgeräte (30) zum Einbuchen beim Wechsel von Mobilfunknetzen (10, 12) durch Ortsänderung (Roaming), insbesondere durch grenzüberschreitende Ortsänderung (20), wobei Auswahlmittel (38) zum Erzwingen des Funknetzes (10, 12) eines vorbestimmten Mobilfunknetzanbieters (A₁) für einen bestimmten Ort und /oder für eine vorbestimmte Zeit vorgesehen sind, die vorbestimmten Mobilfunknetzanbieter (A₁) mit einer entsprechenden Ortskodierung in einer Liste auf einer SIM-Karte (42), welche für das Mobilfunkendgerät (30) zur Identifizierung vorgesehen ist, abgespeichert sind und eine Gewichtung (78) als Auswahlkriterium für die Mobilfunknetzanbieter auf der SIM-Karte (42) gespeichert ist, **dadurch gekennzeichnet, dass** als weiteres Auswahlkriterium eine Güte des Empfangs auf der SIM-Karte (42) gespeichert ist und die Auswahlmittel (38) zur Auswahl eines Mobilfunknetzanbieters (A₁) nach Gewichtung (78) und Güte des Empfangs ausgebildet sind

2. Vorrichtung für Mobilfunkendgeräte (30) nach Anspruch 1, **dadurch gekennzeichnet, daß** Prüfmittel (44) zum Überprüfen, ob ein ausreichender Empfang für das vorbestimmte Mobilfunknetz (10, 12) gegeben ist.

3. Vorrichtung für Mobilfunkendgeräte (30) nach einem der Ansprüche 1 bis 2, **dadurch** gekennzeichet, daß Schaltmittel (44) vorgesehen sind, die gegebenenfalls auf ein Funknetz mit einem besseren Empfang schalten, falls der Empfang des vorbestimmten Mobilfunknetzanbieters für einen Verbindungsaufbau zu schwach oder nicht vorhanden ist.

4. Vorrichtung für Mobilfunkendgeräte (30) nach einem der Ansprüche 1 bis 3, **dadurch gekennzeichnet, daß** Auswahlmittel (82) zur Auswahl einer Sprache vorgesehen sind.

5. Vorrichtung für Mobilfunkendgeräte (30) nach einem der Ansprüche 1 bis 4, **dadurch gekennzeichnet, daß** eine Sprache voreingestellt vorgesehen ist.

6. Vorrichtung für Mobilfunkendgeräte (30) nach einem der Ansprüche 1 bis 5, **dadurch gekennzeichnet, daß** eine optische und/oder akustische Anzeige (46) vorgesehen ist.

7. Verfahren für Mobilfunkendgeräte (30) zum Einbuchen beim Wechsel von Mobilfunknetzen durch Ortsänderung (Roaming), insbesondere durch grenzüberschreitende Ortsänderung (20), wobei das Funknetz eines vorbestimmten Mobilfunknetzanbieters (A₁) für einen bestimmten Ort und /oder für eine vorbestimmte Zeit erzwungen wird, die vorbestimmten Mobilfunknetzanbieter (A₁) mit einer entsprechenden Ortskodierung in einer Liste auf einer SIM-Karte (42), welche für das Mobilfunkendgerät (30) zur Identifizierung vorgesehen ist, abgespeichert und die Mobilfunknetzanbieter unterschiedlich gewichtet werden **dadurch gekennzeichnet**, das die Mobilfunknetzanbieter je nach voreingestellter Gewichtung und Stärke des Funknetzes ausgewählt werden, wobei die Gewichtung sind eine Güte des Empfangs als Auswahlkriterien aus einem Speicher der SIM-Karte ausgelesen werden.

8. Verfahren für Mobilfunkendgeräte (30) nach Anspruch 7, **dadurch gekennzeichnet, daß** eine Überprüfung auf eine ausreichende Empfangsleistung für das Funknetz des erzwungenen Mobilfunknetzanbieters (A₁) erfolgt.

9. Verfahren für Mobilfunkendgeräte (30) nach einem der Ansprüche 7 oder 8 **dadurch gekennzeichnet, daß** bei zu schwacher oder keiner Empfangsleistung des vorbestimmten Mobilfunknetzanbieters (A₁) auf ein Funknetz mit einem besseren Empfang geschaltet wird.

10. Verfahren für Mobilfunkendgeräte (30) nach einem der Ansprüche 7 bis 9, **dadurch gekennzeichnet, daß** eine Sprache ausgewählt werden kann.

11. Verfahren für Mobilfunkendgeräte (30) nach einem der Ansprüche 7 bis 10, **dadurch gekennzeichnet, daß** eine Sprache voreingestellt wird, die von dem erzwungenen Mobilfunknetzanbieter (A₁) zu verwenden ist.

12. Verfahren für Mobilfunkendgeräte (30) nach Anspruch 11, **dadurch gekennzeichnet, daß** Informationen in der voreingestellten Sprache mit einer optischen und/oder akustischen Anzeige (46) erfolgen.

13. Verfahren für Mobilfunkendgeräte (30) nach einem der Ansprüche 7 bis 12, **dadurch gekennzeichnet, daß** die Steuerung der Auswahl und Überprüfung über ein auf der SIM-Karte (42) vorgesehenes SIM-Application-Toolkit erfolgt.

14. Verfahren für Mobilfunkendgeräte (30) nach einem der Ansprüche 7 bis 13, **dadurch gekennzeichnet, daß** bei einer Unterbrechung des Empfangs zwischen dem (30) Mobilfunkendgerät und dem Mobilfunknetz (10, 12) erneut das Funknetz eines vorbestimmten Mobilfunknetzanbieters (A₁) für einen bestimmten Ort und /oder für eine vorbestimmte Zeit erzwungen wird.

## Claims

1. A device for mobile radio terminals (30) for registering when changing mobile radio networks (10, 12) by change of location (roaming), especially by cross-border change of location (20), wherein selection means (38) are provided to enforce the mobile radio network (10, 12) of a predetermined mobile radio network provider (A₁) for a particular location and / or for a predetermined time, the predetermined mobile radio network providers (A₁) are stored with a corresponding location encoding in a list on a SIM card (42), which is provided for the mobile radio terminal (30) for identification, and a weighting (78) is stored on the SIM card (42) as a selection criterion for the mobile radio network providers, **characterized in that** a quality of reception is stored on the SIM card (42) as an additional selection criterion and the selection means (38) are configured for selecting a mobile radio network provider (A₁) by weighting (78) and quality of reception.

2. A device for mobile radio terminals (30) according to claim 1, **characterized in that** checking means (44) are provided for checking whether a sufficient reception is given for the predetermined mobile radio network (10, 12).

3. A device for mobile radio terminals (30) according to one of claims 1 to 2, **characterized in that** switching means (44) are provided, which optionally switch to a mobile radio network with a better reception if the reception of the predetermined mobile radio network provider is too weak for a connection setup or is non-existent.

4. A device for mobile radio terminals (30) according to one of claims 1 to 3, **characterized in that** selection means (82) are provided for selecting a language.

5. A device for mobile radio terminals (30) according to one of claims 1 to 4, **characterized in that** a language is provided by default.

6. A device for mobile radio terminals (30) according to one of claims 1 to 5, **characterized in that** an optical and / or acoustic indicator (46) is provided.

7. A method for mobile radio terminals (30) for registering when changing mobile radio networks by change of location (roaming), especially by cross-border change of location (20), wherein the radio network of a predetermined mobile radio network provider (A₁) is enforced for a particular location and / or for a predetermined time, the predetermined mobile radio network providers (A₁) are stored with a corresponding location encoding in a list on a SIM card (42), which is provided for the mobile radio terminal (30) for identification, and the mobile radio network providers are weighted differently **characterized in that** the mobile radio network providers are selected depending on the predetermined weighting and strength of the radio network, wherein the weighting and a quality of reception are read out from a memory of the SIM card as selection criteria.

8. A method for mobile radio terminals (30) according to claim 7, **characterized in that** a check for sufficient reception power of the radio network of the enforced mobile radio network provider (A₁) is carried out.

9. A method for mobile terminals (30) according to one of claims 7 or 8 **characterized in that** switching to a radio network with a better reception is carried out in case of weak or zero reception power of the predetermined mobile radio network provider (A₁).

10. A method for mobile terminals (30) according to one of claims 7 to 9, **characterized in that** a language can be selected.

11. A method for mobile terminals (30) according to one of claims 7 to 10, **characterized in that** a language is preset, which is to be used by the enforced mobile radio network provider (A1).

12. A method for mobile terminals (30) according to claim 11, **characterized in that** information occur in the preset language on a visual and / or acoustic indicator (46).

13. A method for mobile terminals (30) according to one of claims 7 to 12, **characterized in that** the control of the selecting and checking is performed by a SIM application toolkit provided on the SIM-card (42).

14. A method for mobile terminals (30) according to one of claims 7 to 13, **characterized in that** upon interruption of the reception between the mobile radio terminal (30) and the mobile radio network (10, 12) the radio network of a predetermined mobile radio network provider (A₁) is enforced again for a particular location and / or for a predetermined time.

## Revendications

1. Dispositif pour terminaux de radiotéléphonie mobile (30) destiné à se connecter lors d'un changement de réseau de radiotéléphonie mobile (10, 12) suite à un changement de lieu (itinérance), notamment un changement de pays (20), des moyens de sélection (38) destinés à contraindre le réseau de radiotéléphonie (10, 12) d'un opérateur de réseau mobile prédéfini (A₁) étant prévus pour un lieu défini et/ou une période prédéfinie, les opérateurs de réseau mobile prédéfinis (A₁) étant mémorisés avec le lieu codé correspondant contenu dans une liste d'une carte SIM (42) prévu pour le terminal de radiotéléphonie mobile (30) en vue de l'identification, et une pondération (78) étant mémorisée sur la carte SIM (42) en tant que critère de sélection des opérateurs de réseau mobile, **caractérisé en ce qu'**un facteur de qualité de réception est prévu sur la carte SIM (42) en tant que critère de sélection supplémentaire et les moyens de sélection (38) sont configurés pour sélectionner un opérateur de réseau mobile (A₁) d'après la pondération (78) et le facteur de qualité de réception.

2. Dispositif pour terminaux de radiotéléphonie mobile (30) selon la revendication 1, **caractérisé en ce que** des moyens de vérification (44) sont prévus pour vérifier si la réception destinée au réseau de radiotéléphonie mobile prédéfini (10, 12) est suffisante.

3. Dispositif pour terminaux de radiotéléphonie mobile (30) selon l'une quelconque des revendications 1 à 2, **caractérisé en ce qu'**il est prévu des moyens de commutation (44) qui commutent le cas échéant sur un réseau de radiotéléphonie de réception meilleure si la réception de l'opérateur de réseau mobile prédéfini est trop faible pour établir une connexion ou est inexistante.

4. Dispositif pour terminaux de radiotéléphonie mobile (30) selon l'une quelconque des revendications 1 à 3, **caractérisé en ce qu'**il est prévu des moyens de sélection (82) pour sélectionner une langue.

5. Dispositif pour terminaux de radiotéléphonie mobile (30) selon l'une quelconque des revendications 1 à 4, **caractérisé en ce qu'**il est prévu qu'une langue soit préréglée.

6. Dispositif pour terminaux de radiotéléphonie mobile (30) selon l'une quelconque des revendications 1 à 5, **caractérisé en ce qu'**il est prévu un affichage optique et/ou acoustique (46).

7. Procédé pour terminaux de radiotéléphonie mobile (30) destiné à se connecter lors du changement de réseau de radiotéléphonie mobile suite à un changement de lieu (itinérance), notamment un changement de pays (20), le réseau de radiotéléphonie d'un opérateur de réseau mobile prédéfini (A₁) étant contraint pour un lieu défini et/ou une période prédéfinie, les opérateurs de réseau mobile prédéfinis (A1) étant mémorisés avec le lieu codé correspondant contenu dans une liste d'une carte SIM (42) prévu pour le terminal de radiotéléphonie mobile (30) en vue de l'identification, et les opérateurs de réseau mobile étant pondérés de différente manière, **caractérisé en ce que** les opérateurs de réseau mobile sont sélectionnés en fonction de la pondération et de la puissance du réseau de radiotéléphonie préréglées, la pondération et le facteur de qualité de réception étant lus en tant que critère de sélection à partir d'une mémoire de la carte SIM.

8. Procédé pour terminaux de radiotéléphonie mobile (30) selon la revendication 7, **caractérisé en ce que** la puissance de réception du réseau de radiotéléphonie de l'opérateur de réseau mobile contraint (A₁) est vérifiée pour savoir si elle est suffisante.

9. Procédé pour terminaux de radiotéléphonie mobile (30) selon l'une quelconque des revendications 7 ou 8, **caractérisé en ce qu'**une commutation sur un réseau de radiotéléphonie de réception meilleure a lieu en cas de puissance de réception de l'opérateur de réseau mobile (A₁) trop faible ou inexistante.

10. Procédé pour terminaux de radiotéléphonie mobile (30) selon l'une quelconque des revendications 7 à 9, **caractérisé en ce qu'**une langue peut être sélectionnée.

11. Procédé pour terminaux de radiotéléphonie mobile (30) selon l'une quelconque des revendications 7 à 10, **caractérisé en ce qu'**une langue devant être utilisée par l'opérateur de réseau mobile contraint (A₁) peut être préréglée.

12. Procédé pour terminaux de radiotéléphonie mobile (30) selon la revendication 11, **caractérisé en ce que** des informations sont disponibles dans la langue préréglée à l'aide d'un affichage (46) optique et/ou acoustique.

13. Procédé pour terminaux de radiotéléphonie mobile (30) selon l'une quelconque des revendications 7 à 12, **caractérisé en ce que** la commande de la sélection et la vérification s'effectuent par le biais d'un toolkit d'application de la carte SIM prévu sur la carte SIM (42).

14. Procédé pour terminaux de radiotéléphonie mobile (30) selon l'une quelconque des revendications 7 à 13, **caractérisé en ce qu'**en cas d'interruption de la réception entre le terminal de radiotéléphonie mobile (30) et le réseau de radiotéléphonie mobile (10, 12), le réseau de radiotéléphonie d'un opérateur de réseau mobile prédéfini (A₁) est de nouveau contraint pour un lieu défini et/ou une période prédéfinie.
